# EUROPEAN PATENT SPECIFICATION

(11) **EP 3 756 870 B1**
(45) Date of publication and mention of the grant of the patent: **20.11.2024**
(21) Application number: 20181610.5
(22) Date of filing: 23.06.2020
(51) Int. Cl.: B29C 70/50, B29C 70/70, G06K 19/077, B29L 30/00, B29D 30/00

(54) **PROCESSING METHOD AND WORKING DEVICE FOR INSERTING ELECTRONIC DEVICES THAT ARE SUITABLE FOR COMMUNICATING IN RADIO FREQUENCY INTO RESPECTIVE RUBBER SLEEVES**
VERFAHREN UND VORRICHTUNG ZUM EINFÜGEN EINER ELEKTRONISCHEN VORRICHTUNG, DIE FÜR RADIOFREQUENZ-KOMMUNIKATION GEEIGNET IST, IN GUMMIHÜLSEN
PROCEDE ET DISPOSITIF PERMETTANT D'INSERER DES APPAREILS ELECTRONIQUES APTES A COMMUNIQUER PAR RADIO FREQUENCE DANS DES MANCHONS EN CAOUTCHOUC

(30) Priority: 25.06.2019 IT 201900009990
(43) Date of publication of application: 30.12.2020
(73) Proprietor: Bridgestone Europe NV/SA, 1930 Zaventem (BE)
(72) Inventor: Vecchione, Ciro, 00128 Roma (IT); Di Egidio, Alfonso, 00128 Roma (IT)
(74) Representative: Marchetti, Alessio

(56) References cited:
- US-A1- 2011 284 155
- US-A1- 2012 298 309

## Description

### TECHNICAL SECTOR

The present invention relates to a method and a processing unit for inserting electronic devices that are suitable for communicating in radio frequency into respective rubber sleeves.

The present invention finds advantageous application in the insertion of transponders into respective rubber sleeves, to which the following description will make explicit reference without this implying any loss of generality.

### PRIOR ART

In recent years, so-called *"smart"* pneumatic tyres have emerged, which are capable of forming an active part of modern vehicles, supplying information concerning the type of pneumatic tyres mounted, information concerning the status of the pneumatic tyres and also information concerning environmental conditions.

A *"smart"* pneumatic tyre is normally equipped with a transponder (that is, an electronic device suitable for communicating in radio frequency) which permits remote communication (that is, to both the vehicle whereupon the tyre is mounted and to an operator who must carry out the checking or the replacement of the pneumatic tyre) of the identification, the characteristics and the history of the pneumatic tyre.

Recently, the unification has been proposed of RFID *("Radio-Frequency IDentification")* technology, based upon the presence of transponders, and TPMS *("Tyre Pressure Monitoring Systems*") technology, which measures the effective inflation pressure in order to store within transponders the effective inflation pressure and then remotely communicate the effective inflation pressure by means of the transponders themselves.

Initially, it was proposed to glue a transponder onto the inner surface or onto the external surface of a sidewall of a pneumatic tyre; this solution is extremely simple from a design perspective and is applicable also to existing pneumatic tyres; however, by contrast, it does not guarantee that the transponder will not detach from the pneumatic tyre (especially when it is glued to the external surface) following the cyclical deformations to which the sidewall of a pneumatic tyre is subjected.

Thereafter, the integration of a transponder within the structure of a pneumatic tyre was proposed, that is, within the interior of the various layers that make up the pneumatic tyre.

In order to be able to integrate a transponder into the structure of a pneumatic tyre, the transponder is generally inserted in advance into a rubber sleeve that completely surrounds the transponder on all sides; such a rubber sleeve has the function of both allowing the radio frequency signals to be emitted and received more efficiently, exploiting the dielectric properties of the rubber, and the function of protecting the transponder during the handling that is necessary in order to couple the transponder itself to the components that constitute the pneumatic tyre.

In order to insert the transponders into respective rubber sleeves, it is known to advance a first rubber belt, which is arranged horizontally along a straight insertion path, to place the transponder onto an upper surface of the first rubber strip, to position a second rubber strip having the same dimensions as the first rubber belt over the upper surface of the first rubber belt (and therefore above the previously placed transponder), to press therebetween the two rubber belts by means of at least one pair of cooperating rollers, wherebetween the two rubber belts are passed, and then to transversely cut the two rubber belts in order to separate the rubber sleeve (which comprises a portion of the two rubber belts).

Document US 2011/284155 A1 discloses, according to its abstract, a method for manufacturing at least one member comprising at least one rubber-coated electronic component, in which the component is placed in contact with a first strip of rubber and it is covered by a second strip of rubber so as to coat the component.

### DESCRIPTION OF THE INVENTION

The object of the present invention is to provide a method and a processing unit for inserting electronic devices that are suitable for communicating in radio frequency into respective rubber sleeves, which method and processing unit make it possible to obtain the precise positioning of an electronic device suitable for communicating in radio frequency into a corresponding rubber sleeve, and that are at the same time easy and economical to manufacture.

According to the present invention, a processing method according to claim 1 and unit according to claim 12 are provided for inserting electronic devices that are suitable for communicating in radio frequency into respective rubber sleeves, according to that set forth in the appended claims.

The claims describe preferred embodiments of the present invention forming an integral part of the present description.

### BRIEF DESCRIPTION OF THE DRAWINGS

The present invention will now be described with reference to the attached drawings, which show an exemplary, non-limiting embodiment, wherein:
- Figure 1 is a schematic view of a transponder inserted into a rubber sleeve;
- Figures 2 and 3 are two cross sectional views of the transponder of Figure 1 according to the section line II-II and according to the section line III-III, respectively;
- Figure 4 is a schematic and side view of a processing unit that inserts transponders into respective rubber sleeves;
- Figure 5 is a schematic and plan view of the processing unit of Figure 4;
- Figures 6 and 7 are two schematic and side views of the processing unit of Figure 4 in two different operating configurations; and
- Figure 8 schematically shows a pressure roller and the corresponding actuator of the processing unit of Figure 4.

### PREFERRED EMBODIMENTS OF THE INVENTION

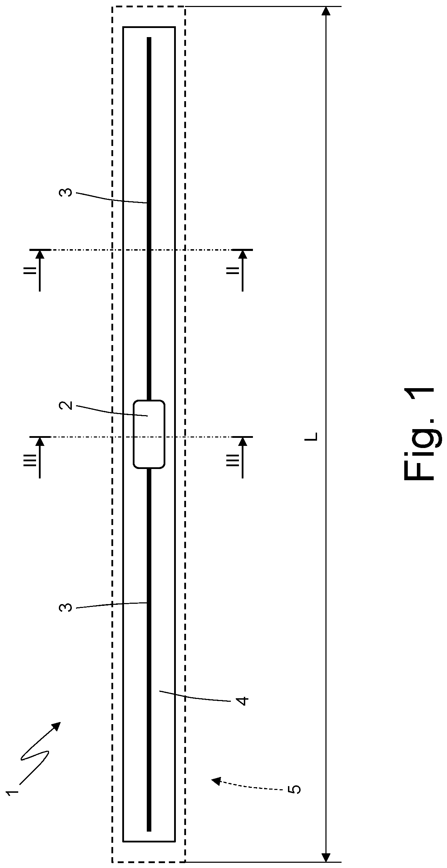

In Figure 1, the numeral 1 denotes a transponder in its entirety, i.e., an electronic device (normally passive, i.e., without a dedicated power supply) that is capable of storing information and that is able to communicate by means of radio frequency. In other words, the transponder 1 is a *"smart label"* of small dimensions that is suitable for responding to remote polling by specific fixed or portable devices, called readers (or else polling devices); a reader is capable of reading and/or modifying the information contained within the transponder 1 that is polling whilst communicating with the transponder 1 itself in radio frequency. Accordingly, the transponder 1 is part of a wireless reading and/or writing system that operates according to so-called RFID technology *("Radio-Frequency IDentification").*

The transponder 1 is intended to be integrated into a pneumatic tyre, i.e., to be inserted between the components of the pneumatic tyre during the construction of the pneumatic tyre itself, or it is intended to be fixed onto an outer surface of the pneumatic tyre 1.

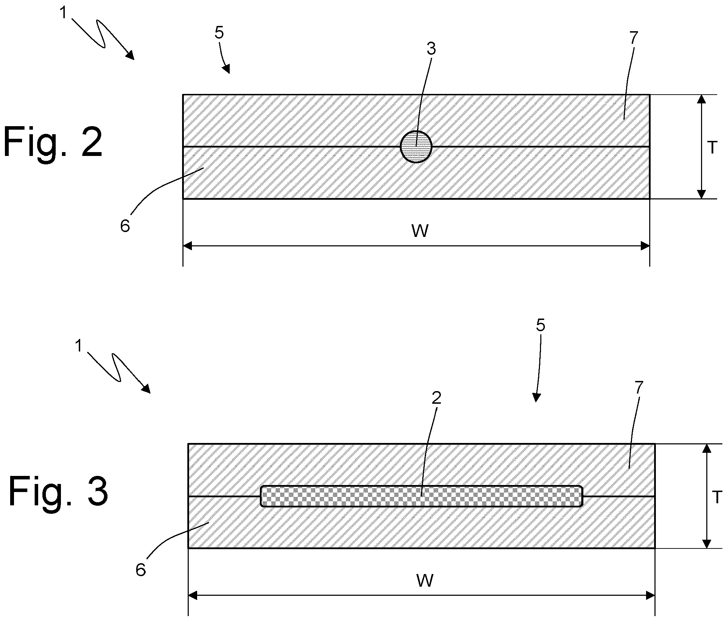

According to that which is shown in Figure 1, the transponder 1 comprises an electronic circuit 2 (i.e., a microchip) equipped with non-volatile memory (typically EEPROM or FRAM, the latter being more costly, but technologically more advanced), an antenna 3 connected to the electronic circuit 2, and a support 4 that carries both the electronic circuit 2 and the antenna 3 and that is frequently defined as a *"substrate"* (typically comprising a thin layer of mylar, plastic such as PET or PVC, or other similar materials); as said also below, the support 4 also could not be present. In the embodiment shown in Figure 2, the antenna 3 is a dipole antenna (or simply a dipole) and comprises two equally open arms that are implemented using a linear electrical conductor whereupon the currents flow that remotely radiate the electromagnetic field.

In use, the antenna 3 receives an electromagnetic signal that, by electromagnetic induction, induces a difference in electrical potential within the antenna 3, which generates the circulation of an electrical current within the electronic circuit 2 in order to supply power to the electronic circuit 2 itself; the electronic circuit 2, thus activated, transmits the data contained within its memory by means of the antenna 3 and, where appropriate, also modifies the data contained within its memory.

According to that which is shown in Figures 1, 2 and 3, the transponder 1 is inserted into a rubber sleeve 5, comprising two strips 6 and 7 of green rubber superimposed and pressed one against the other (preferably, the rubber of the two rubber strips 6 and 7 is initially green and is vulcanized together with the rest of the pneumatic tyre during the final vulcanization of the pneumatic tyre itself); in general, the two strips 6 and 7 of green rubber of the sleeve 5 are 1-2 mm longer/wider than the transponder 1 (i.e., than the electronic circuit 2 and the antenna 3). The two strips 6 and 7 of green rubber are initially parallelepiped (but may also take a different form) and deform around the components of the transponder 1 when they are pressed one against the other around the transponder 1 itself. According to an alternative embodiment, the two rubber strips 6 and 7 of the sleeve 5 are vulcanized from the beginning (i.e., the rubber of the two strips of rubber 6 is immediately vulcanized) or semi-vulcanized (or only partially vulcanized); the two rubber strips 6 and 7 could also have differing degrees of vulcanization therebetween (for example, the strip 6 could be of green rubber whilst the strip 7 could be of vulcanized rubber or semi-vulcanized rubber or vice versa).

According to a different embodiment not shown, the support 4 is absent and its function is performed by the strips 6 and 7 of rubber of the sleeve 5.

According to a preferred (but clearly non-limiting) embodiment, the thickness T of the sleeve 5 (containing the transponder 1 within the interior thereof) is between 0.3 and 2 mm, the width W of the sleeve 5 is approximately 8-12 mm, and the length L of the sleeve 5 is approximately 60-80 mm.

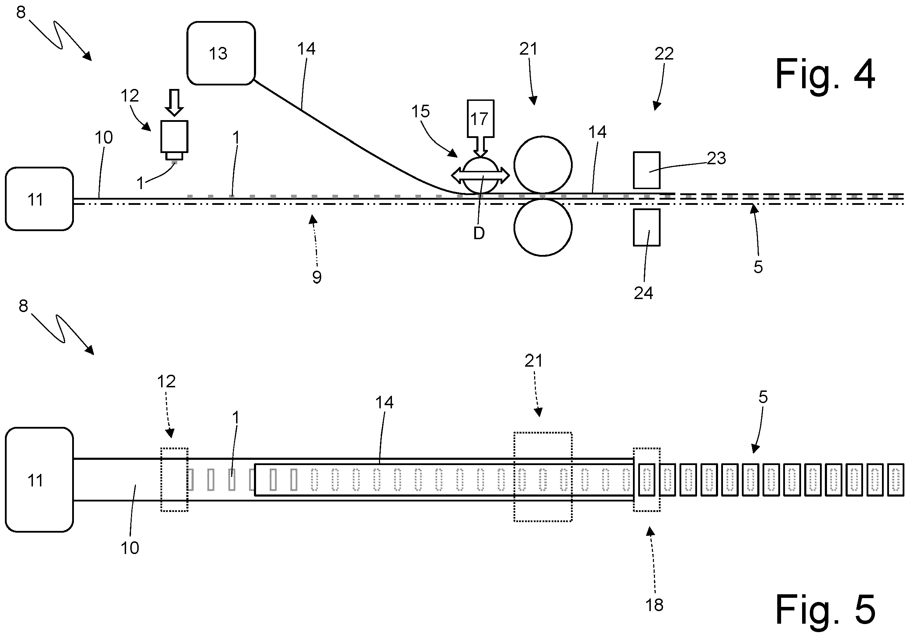

In Figures 4 and 5, the number 8 indicates a processing unit for inserting the transponders 1 into the corresponding rubber sleeves 5 in its entirety.

The processing unit 8 comprises a conveyor 9 that advances a single rubber belt 10 arranged (for example horizontally) along a horizontal and straight insertion path; as described below, the rubber belt 10 is intended to form the strip 6 of each sleeve 5. The rubber belt 10 is fed to the conveyor 9 by means of a feed device 11 which could produce the rubber belt 10 by means of an extruder or else it could unwind the rubber belt 10 from a reel (wherein the rubber belt 10 is wound, for example by means of the interposition of a non-stick film that could be removed as the unwinding proceeds and that is generally reused after the eventual removal thereof).

The processing unit 8 includes a feed device 12 that places each transponder 1 upon an upper surface of the rubber belt 10 and (approximately) at the center of the rubber belt 10; necessarily, each transponder 1 is placed upon the upper surface of the rubber belt 10 in such a way as to stay within the confines of the rubber belt 10 itself. In the preferred embodiment shown in the accompanying figures, each transponder 1 is transversely placed upon the upper surface of the rubber belt 10, i.e., with a longitudinal axis of the transponder 1 perpendicular to a longitudinal axis 10 of the rubber belt 10; according to an alternative embodiment, not shown, each transponder 1 is longitudinally placed upon the upper surface of the rubber belt 10, i.e., with the longitudinal axis of the transponder 1 parallel (and coaxial) to the longitudinal axis of the rubber belt 10.

For example, the feed device 12 could comprise a gripping head (suction or magnetic) that is suitable for picking up and holding a transponder 1 and a motorized arm that cyclically moves the gripping head between a pickup station, wherein the gripping head picks up a transponder 1, and a transfer station, wherein the gripping head places the transponder 1 upon the upper surface of the rubber belt 10. In other words, the gripping head of the feed device 12 can hold a transponder 1 by means of pneumatic suction or else by means of the magnetic attraction generated by an electromagnet.

In the embodiment shown in the attached figures, the feed device 12 places upon the upper surface of the rubber belt 10 a single transponder 1 at a time; according to a different embodiment, not shown, the feed device 12 places upon the upper surface of the rubber belt 10 several transponders 1 at a time (for example two, three, four, five... transponders 1 at a time).

The processing unit 8 comprises a feed device 13 that is arranged downstream of the feed device 12 along the direction of travel of the rubber belt 10 and places upon the upper surface of the rubber belt 10, and above each previously placed transponder 1 a rubber belt 13; as described below, each rubber belt 13 is intended to form the strip 7 of each sleeve 5. The feed device 13 could produce the rubber belt 14 by means of an extruder or else it could unwind the rubber belt 14 from a reel (wherein the rubber belt 14 is wound, for example by means of the interposition of a non-stick film that could be removed as the unwinding proceeds and that is generally reused after the eventual removal thereof).

In the embodiment illustrated in the attached figures, the rubber belt 14 is slightly narrower than the underlying rubber belt 10, whilst, according to other embodiments that are not shown, the rubber belt 14 has exactly the same size as the rubber belt 10.

Both of the rubber belts 10 and 14 can be made from green rubber, semi-vulcanized rubber or else from vulcanized rubber; if necessary the rubber that constitutes one rubber belt, 10 and 14, could be different (both as regards the degree of vulcanization and as regards the chemical composition) from the rubber that constitutes the other rubber belt 14 or 10.

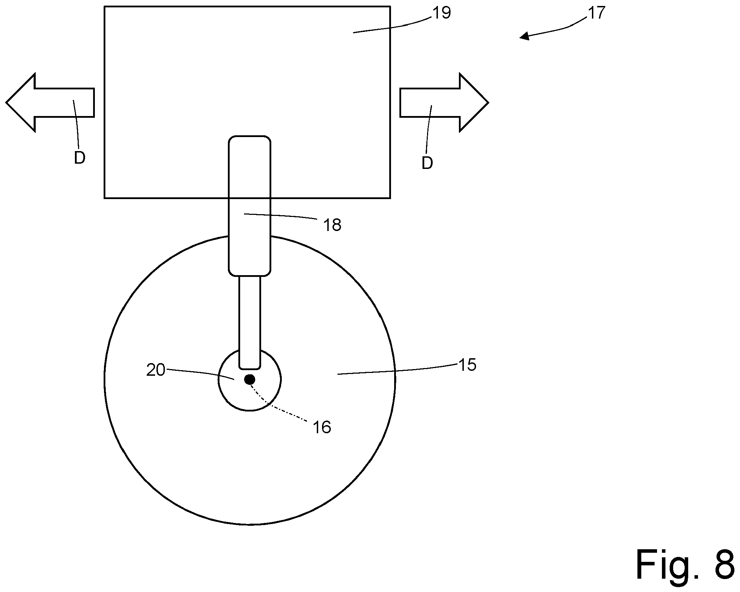

The processing unit 8 comprises a pressure roller 15, which is arranged above the rubber belt 14, that is mounted idling in order to freely rotate around an axis of rotation 16 (shown in Figure 8) perpendicular to the insertion path, and that is cyclically moved back and forth along a direction D that is perpendicular to the axis of rotation 16 and that is parallel to the insertion path. The processing unit 8 comprises an actuator 17 that supports the pressure roller 15 in a rotatable manner (i.e., allowing the pressure roller 15 to rotate freely around the axis of rotation 16), that cyclically moves the pressure roller 15 along the direction D, and at the same time presses the pressure roller 15 against the underlying rubber belt 14 with a predetermined and constant force. In other words, the actuator 17 causes the pressure roller 15 to roll above the rubber belt 14 moving back and forth along the direction D in order to perform the *"rolling"* of the rubber belt 14 against the rubber belt 10 with the interposition of the transponder 1. The actuator 17 then causes the pressure roller 15 to roll over the rubber belt 14 downstream of the feed device 13 in order to press the rubber belt 14 against the rubber belt 10 and causing the pressure roller 15 to complete a forward stroke in one direction and a return stroke in the opposite direction.

In particular, according to that which is shown in Figure 8, the actuator 17 comprises elastic means 18 (mechanical or pneumatic) which are interposed between a frame 19 of the actuator 17 and the bearings 20 that support the pressure roller 15; in this way the pressure roller 15 is always pressed, with the same predetermined and constant force, against the rubber belt 14, independent of the non-uniformities of the rubber belt 14 that are due to the alternating presence of the transponders 1. Obviously, the predetermined force with which the pressure roller 15 is pressed against the rubber belt 14 depends upon the setting of the elastic means 18, and is therefore varied by means of adjusting the same elastic means 18.

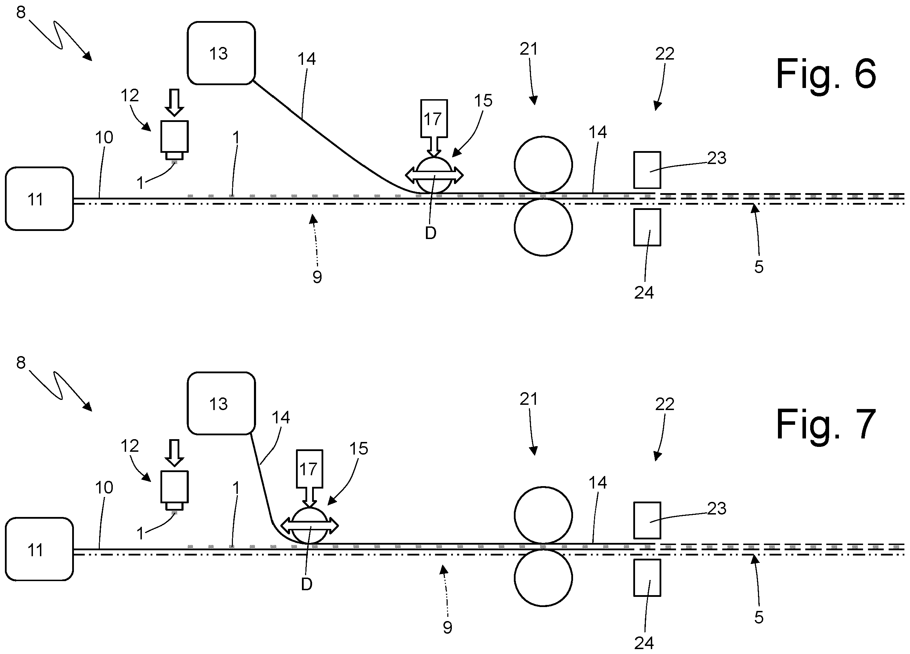

In use, when both rubber belts 10 and 14 are stationary, the pressure roller 15 is moved along the direction D, i.e., parallel to the insertion path, from a starting position (shown in Figure 5) wherein the pressure roller 15 is farther from the feed device 13, to an arrival position (shown in figure 7) wherein the pressure roller 15 is closer to the feed device 13, and is then moved in the opposite direction from the arrival position to the starting position; during this movement, the pressure roller 15 rolls over the rubber belt 14, pressing the rubber belt 14 itself against the rubber belt 10 with a predetermined and constant force. The pressure roller 15 is shown in Figure 6 when it is in an intermediate position between the starting position (shown in Figure 5) and the arrival position (shown in Figure 7).

The *"rolling"* performed by the pressure roller 15 that moves back and forth along the direction D (i.e., from the starting position to the arrival position and vice versa) makes it possible for the rubber belt 14 to adhere, in an optimal way, to the underlying rubber belt 10 with the interposition of the transponder 1.

According to a preferred embodiment shown in the attached figures, the processing unit 8 comprises a compression device 21 that is arranged downstream of the feed device 13 and the pressure roller 15 along the direction of travel of the rubber belt 10 and is suitable for pressing the rubber belt 14 against the rubber belt 10 (with the interposition of the corresponding transponder 1). According to a preferred embodiment shown in the attached figures, the compression device 21 comprises at least one pair of pressure rollers cooperating therebetween, wherein the rubber belts 10 and 14 are passed therebetween.

The processing unit 8 comprises a cutting device 22 that is arranged downstream of the compression device 21 along the direction of travel of the rubber belt 10 and that is suitable for cutting the rubber belts 10 and 14 in performing a perimeter cut of a rectangular shape around each transponder 1 in order to separate the sleeves 5 containing the respective transponders 1 from the rubber belts 10 and 14.

The cutting device 22 comprises a cutting head 23 carrying a rectangular blade (that is clearly internally hollow) and a counter head 24 that is aligned with the cutting head 23 and that is arranged on the other side of the rubber belts 10 and 14 in relation to the cutting head 23; the cutting head 23 is vertically movable, such as to approach and move away to/from the rubber belts 10 and 14 whilst the counter head 24 can be fixed, or else it can also be vertically movable, such as to approach and move away to/from the rubber belts 10 and 14.

In the embodiment shown in the attached figures, the cutting device 22 cuts out one transponder 1 at a time; according to a different embodiment not shown, the cutting device 22 cuts out several transponders 1 at a time (for example two, three, four, five... transponders 1 at a time).

It is important to emphasize that the conveyor 9 moves the rubber belt 10 according to an intermittent law of motion (i.e., step-by-step) that envisages a cyclic alternation of motion phases, during which the rubber belt 10 is advanced, and stop phases, during which the rubber belt 10 remains stationary. All of the processing (the feeding of the transponder 1, the application of the rubber belt 14 by means of the pressure roller 15, the cutting out of the sleeves 5) is executed when the rubber belt 10 is stationary (i.e. during the stop phases) and is suspended when the rubber belt 10 is in motion (i.e., during the motion phases).

The embodiments described herein can be combined with each other without departing from the scope of protection of the present invention, which is defined by the appended claims.

The processing unit 8 described above has many advantages.

In the first place, the processing unit 8 described above is particularly simple and economical to implement insofar as it envisages the execution of only a few easily automated operations.

Furthermore, the insertion method described above makes it possible to insert a transponder 1 into the sleeve 5, whilst always ensuring high precision, insofar as each rubber belt 14 is placed upon the upper surface of the rubber belt 10 and upon the corresponding transponders 1 when the rubber belt 10 is stationary.

### LIST OF REFERENCE NUMBERS IN THE FIGURES

- 1: transponder
- 2: electronic circuit
- 3: antenna
- 4: support
- 5: sleeve
- 6: strip
- 7: strip
- 8: processing unit
- 9: conveyor
- 10: rubber belt
- 11: feed device
- 12: feed device
- 13: feed device
- 14: rubber belt
- 15: pressure roller
- 16: axis of rotation
- 17: actuator
- 18: elastic means
- 19: frame
- 20: bearings
- 21: compression device
- 22: cutting device
- 23: cutting head
- 24: counter head
- D: direction
- H: height
- L: length
- W: width
- T: thickness

## Claims

1. Processing method for inserting electronic devices (1) that are suitable for communicating in radio frequency into respective rubber sleeves (5), wherein each thereof comprises two overlapping strips (6, 7) that enclose therebetween a corresponding electronic device (1) that is suitable for communicating in radio frequency; the processing method comprises the steps of:
advancing a first rubber belt (10) preferably arranged horizontally along an insertion path by means of a conveyor (9), wherein the first rubber belt (10) is intended to form a first strip (6) of each sleeve (5);
placing the electronic devices (1) that are suitable for communicating in radio frequency upon an upper surface of the first rubber belt (10) by means of a first feed device (12);
placing, by means of a second feed device (13), upon the upper surface of the first rubber belt (10) and upon each electronic device (1) that is suitable for communicating in radio frequency and was previously placed, a second rubber belt (14) that completely covers the electronic devices (1) that are suitable for communicating in radio frequency, wherein the second rubber belt (14) is intended to form a second strip (7) of each sleeve (5);
cutting out, by means of a cutting device (22) arranged downstream of the second feed device (13) along the direction of travel of the first rubber belt (10), the two rubber belts (10, 14) in performing a perimeter cut around each electronic device (1) that is suitable for communicating in radio frequency in order to separate each sleeve (5) containing a respective electronic device (1) that is suitable for communicating in radio frequency from the two rubber belts (10, 14); and
causing a pressure roller (15) to roll over the second rubber belt (14) downstream of the second feed device (13) in order to press the second rubber belt (14) against the first rubber belt (10)
the processing method is **characterized in that** the pressure roller is caused to complete a forward stroke in one direction and a return stroke in the opposite direction,
the conveyor (9) advances the first rubber belt (10) according to an intermittent motion law that provides for a cyclic alternation of motion phases during which the first rubber belt (10) is advanced and stop phases during which the first rubber belt (10) remains stationary; and
the pressure roller (15) is caused to roll over the second rubber belt (14) when the first rubber belt (10) is stationary.

2. Processing method according to claim 1, wherein the pressure roller (15) is mounted idling in order to freely rotate around an axis of rotation (16) perpendicular to the insertion path.

3. Processing method according to claim 1 or 2, wherein the pressure roller (15) is cyclically moved back and forth along a direction (D) that is parallel to the insertion path.

4. Processing method according to one of the claims from 1 to 3, wherein an actuator (17) is provided for that supports the pressure roller (15) in a rotatable manner, that cyclically moves the pressure roller (15), and at the same time presses the pressure roller (15) against the underlying rubber belt (14) with a predetermined and constant force.

5. Processing method according to claim 4, wherein the actuator (17) comprises elastic means (18) that are interposed between a frame (19) of the actuator (17) and bearings (20) that support the pressure roller (15).

6. Processing method according to one of the claims from 1 to 5, wherein when both of the rubber belts (10, 14) are stationary the pressure roller (15) is moved parallel to the insertion path, from a starting position wherein the pressure roller (15) is farther from the second feed device (13) to an arrival position wherein the pressure roller (15) is closer to the second feed device (13), and is then moved in the opposite direction from the arrival position to the starting position.

7. Processing method according to one of the claims from 1 to 6, wherein the cutting device (22) comprises a cutting head (23) that carries a first internally hollow blade and a counter head (24) that is aligned with the cutting head (23) and that is arranged on the other side of the first rubber belt (10) in relation to the cutting head (23).

8. Processing method according to one of the claims from 1 to 7, wherein the first feed device (12) comprises:
a first gripping head that is suitable for picking up and holding at least one electronic device (1) that is suitable for communicating in radio frequency; and
a motorized arm that cyclically moves the gripping head between a pickup station, wherein the gripping head picks up an electronic device (1) that is suitable for communicating in radio frequency, and a transfer station, wherein the gripping head places the electronic device (1) that is suitable for communicating in radio frequency upon the upper surface of the first rubber belt (10).

9. Processing method according to one of claims from 1 to 8 and comprising the further step of pressing against one another the first rubber belt (10) and the second rubber belt (14) by means of a compression device (21) that is arranged between the second feed device (13) and the cutting device (22).

10. Processing method according to claim 9, wherein the compression device (21) comprises a pair of pressure rollers cooperating therebetween, wherein the rubber belts (10, 14) are passed therebetween.

11. Processing method according to one of the claims from 1 to 10, wherein the electronic device (1) that is suitable for communicating in radio frequency, is suitable for being integrated into a pneumatic tyre.

12. Processing unit (8) for inserting electronic devices (1) that are suitable for communicating in radio frequency into respective rubber sleeves (5), wherein each thereof comprises two overlapping strips (6, 7) that enclose therebetween a corresponding electronic device (1) that is suitable for communicating in radio frequency; the processing unit (8) comprises:
a conveyor (9) for advancing a first rubber belt (10) preferably arranged horizontally along an insertion path, wherein the first rubber belt (10) is intended to form a first strip (6) of each sleeve (5);
a first feed device (12) for placing the electronic device (1) that is suitable for communicating in radio frequency, upon an upper surface of the first rubber belt (10);
a second feed device (13) for placing upon the upper surface of the first rubber belt (10), and above each previously positioned electronic device (1) that is suitable for communicating in radio frequency, a second rubber belt (14) that completely covers the electronic devices (1) that are suitable for communicating in radio frequency, wherein the second rubber belt (14) is intended to form a second strip (7) of each sleeve (5); a cutting device (22), arranged downstream of the second feed device (13) along the direction of travel of the first rubber belt (10), in order to cut the two rubber belts (10, 14) in performing a perimeter cut around each electronic device (1) that is suitable for communicating in radio frequency in order to separate each sleeve (5) containing a respective electronic device (1) that is suitable for communicating in radio frequency, from the two rubber belts (10); and
a pressure roller (15) that is arranged downstream of the second feed device (13); and
an actuator (17) that causes the pressure roller (15) to roll over the second rubber belt (14) in order to press the second rubber belt (14) against the first rubber belt (10)
the processing unit (8) is **characterized in that**:
the actuator further causes the pressure roller (15) to complete a forward stroke in one direction and a return stroke in the opposite direction, T
and **in that**
the conveyor (9) is suitable for advancing the first rubber belt (10) according to an intermittent motion law that provides for a cyclic alternation of motion phases during which the first rubber belt (10) is advanced and stop phases during which the first rubber belt (10) remains stationary; and
the pressure roller (15) is suitable for being caused to roll over the second rubber belt (14) when the first rubber belt (10) is stationary.

## Patentansprüche

1. Verarbeitungsverfahren zum Einsetzen von elektronischen Vorrichtungen (1), die für eine Hochfrequenzkommunikation geeignet sind, in jeweilige Kautschukhülsen (5), wobei jede davon zwei überlappende Streifen (6, 7) umfasst, die dazwischen eine entsprechende elektronische Vorrichtung (1), die für die Hochfrequenzkommunikation geeignet ist, umschließen; wobei das Verarbeitungsverfahren die Schritte umfasst zum:
Vorwärtsbewegen eines ersten Kautschukbandes (10), das vorzugsweise horizontal entlang eines Einsetzweges mittels eines Förderers (9) angeordnet ist, wobei das erste Kautschukband (10) dazu gedacht ist, um einen ersten Streifen (6) von jeder Hülse (5) auszubilden;
Platzieren der elektronischen Vorrichtungen (1), die für die Hochfrequenzkommunikation geeignet sind, auf einer oberen Oberfläche des ersten Kautschukbandes (10) mittels einer ersten Zuführvorrichtung (12);
Platzieren, mittels einer zweiten Zuführvorrichtung (13), auf der oberen Oberfläche des ersten Kautschukbandes (10) und auf jeder elektronischen Vorrichtung (1), die für die Hochfrequenzkommunikation geeignet ist und vorher platziert wurde, eines zweiten Kautschukbandes (14), das die elektronischen Vorrichtungen (1), die für die Hochfrequenzkommunikation geeignet ist, vollständig bedeckt, wobei das zweite Kautschukband (14) dazu gedacht ist, um einen zweiten Streifen (7) von jeder Hülse (5) auszubilden;
Ausschneiden, mittels einer Schneidvorrichtung (22), die stromabwärts der zweiten Zuführvorrichtung (13) entlang der Laufrichtung des ersten Kautschukbandes (10) angeordnet ist, der zwei Kautschukbänder (10, 14) durch Ausführen eines Umfangsschnitts um jede elektronische Vorrichtung (1) herum, die für die Hochfrequenzkommmunikation geeignet ist, um jede Hülse (5), die eine entsprechende elektronische Vorrichtung (1), die für die Hochfrequenzkommunkation geeignet ist, enthält, von den zwei Kautschukbändern (10, 14) zu trennen; und
Veranlassen einer Druckrolle (15), um über das zweite Kautschukband (14) stromabwärts der zweiten Zuführvorrichtung (13) zu rollen, um das zweite Kautschukband (14) gegen das erste Kautschukband (10) zu drücken
wobei das Verarbeitungsverfahren **dadurch gekennzeichnet ist, dass** die Druckrolle veranlasst wird, um einen Vorwärtshub in eine Richtung und einen Rückwärtshub in die entgegengesetzte Richtung zu beenden,
der Förderer (9) das erste Kautschukband (10) gemäß einem intermittierenden Bewegungsgesetz vorwärts bewegt, das einen zyklischen Wechsel von Bewegungsphasen, während denen das erste Kautschukband (10) vorwärts bewegt wird, und Stillstandsphasen, während denen das erste Kautschukband (10) stationär bleibt, vorsieht; und
die Druckrolle (15) veranlasst wird, über das zweite Kautschukband (14) zu rollen, wenn das erste Kautschukband (10) stationär ist.

2. Verarbeitungsverfahren nach Anspruch 1, wobei die Druckrolle (15) leerlaufend montiert ist, um sich frei um eine Drehachse (16) herum senkrecht zu dem Einsetzweg drehen zu können.

3. Verarbeitungsverfahren nach Anspruch 1 oder 2, wobei die Druckrolle (15) entlang einer Richtung (D), die zu dem Einsetzweg parallel ist, zyklisch hin- und herbewegt wird.

4. Verarbeitungsverfahren nach einem der Ansprüche 1 bis 3, wobei ein Aktor (17) vorgesehen ist, der die Druckrolle (15) auf drehbare Weise stützt, die Druckrolle (15) zyklisch bewegt und dabei die Druckrolle (15) mit einer zuvor bestimmten und konstanten Kraft gegen das darunterliegende Kautschukband (14) drückt.

5. Verarbeitungsverfahren nach Anspruch 4, wobei der Aktor (17) elastische Mittel (18) umfasst, die zwischen einem Rahmen (19) des Aktors (17) und Lagern (20), die die Druckrolle (15) stützen, eingefügt sind.

6. Verarbeitungsverfahren nach einem der Ansprüche 1 bis 5, wobei, wenn beide der Kautschukbänder (10, 14) stationär sind, die Druckrolle (15) von einer Ausgangsposition parallel zu dem Einsetzweg bewegt wird, wobei die Druckrolle (15) weiter von der zweiten Zuführvorrichtung (13) zu einer Ankunftsposition entfernt ist, wobei die Druckrolle (15) näher an der zweiten Zuführvorrichtung (13) ist, und dann in die entgegengesetzte Richtung von der Ankunftsposition zu der Ausgangsposition bewegt wird.

7. Verarbeitungsverfahren nach einem der Ansprüche 1 bis 6, wobei die Schneidvorrichtung (22) einen Schneidkopf (23), der eine erste innen hohle Klinge trägt, und einen Gegenkopf (24), der mit dem Schneidkopf (23) ausgerichtet ist und der auf der anderen Seite des ersten Kautschukbandes (10) in Bezug auf den Schneidkopf (23) angeordnet ist, umfasst.

8. Verarbeitungsverfahren nach einem der Ansprüche 1 bis 7, wobei die erste Zuführvorrichtung (12) umfasst:
einen ersten Greifkopf, der zum Aufnehmen und Halten mindestens einer elektronischen Vorrichtung (1), die für die Hochfrequenzkommunikation geeignet ist, geeignet ist; und
einen motorisierten Arm, der den Greifkopf zwischen einer Aufnahmestation, wobei der Greifkopf eine elektronische Vorrichtung (1), die für die Hochfrequenzkommunikation geeignet ist, aufnimmt, und einer Übertragungsstation zyklisch bewegt, wobei der Greifkopf die elektronische Vorrichtung (1), die für die Hochfrequenzkommunikation geeignet ist, auf der oberen Oberfläche des ersten Kautschukbandes (10) platziert.

9. Verarbeitungsverfahren nach einem der Ansprüche 1 bis 8 und umfassend den weiteren Schritt zum Aneinanderdrücken des ersten Kautschukbandes (10) und des zweiten Kautschukbandes (14) mittels einer Kompressionsvorrichtung (21), die zwischen der zweiten Zuführvorrichtung (13) und der Schneidvorrichtung (22) angeordnet ist.

10. Verarbeitungsverfahren nach Anspruch 9, wobei die Kompressionsvorrichtung (21) ein Paar Druckrollen umfasst, die dazwischen zusammenwirken, wobei die Kautschukbänder (10, 14) dazwischen hindurchgeführt werden.

11. Verarbeitungsverfahren nach einem der Ansprüche 1 bis 10, wobei die elektronische Vorrichtung (1), die für die Hochfrequenzkommunikation geeignet ist, geeignet ist, um in einen Luftreifen integriert zu werden.

12. Verarbeitungseinheit (8) zum Einsetzen von elektronischen Vorrichtungen (1), die für die Hochfrequenzkommunikation geeignet sind, in jeweilige Kautschukhülsen (5), wobei jede davon zwei überlappende Streifen (6, 7) umfasst, die dazwischen eine entsprechende elektronische Vorrichtung (1), die für die Hochfrequenzkommunikation geeignet ist, umschließen; wobei die Verarbeitungseinheit (8) umfasst:
einen Förderer (9) zum Vorwärtsbewegen eines ersten Kautschukbandes (10), der vorzugsweise horizontal entlang eines Einsetzweges angeordnet ist, wobei das erste Kautschukband (10) dazu gedacht ist, um einen ersten Streifen (6) von jeder Hülse (5) auszubilden;
eine erste Zuführvorrichtung (12) zum Platzieren der elektronischen Vorrichtung (1), die für die Funkfrequenzkommunikation geeignet ist, auf einer oberen Oberfläche des ersten Kautschukbandes (10);
eine zweite Zuführvorrichtung (13) zum Platzieren auf der oberen Oberfläche des ersten Kautschukbandes (10), und über jede vorher positionierte elektronische Vorrichtung (1), die für die Hochfrequenzkommunikation geeignet ist, eines zweiten Kautschukbandes (14), der die elektronische Vorrichtung (1), die für die Hochfrequenzkommunikation geeignet ist, vollständig bedeckt, wobei das zweite Kautschukband (14) dazu gedacht ist, um einen zweiten Streifen (7) von jeder Hülse (5) auszubilden; eine Schneidvorrichtung (22), die stromabwärts der zweiten Zuführvorrichtung (13) entlang der Laufrichtung des ersten Kautschukbandes (10) angeordnet ist, um mindestens die zwei Kautschukbänder (10, 14) durch Ausführen eines Umfangsschnitts um jede elektronische Vorrichtung (1) herum, die für die Hochfrequenzkommunikation geeignet ist, zu schneiden, um jede Hülse (5), die eine entsprechende elektronische Vorrichtung (1), die für die Hochfrequenzkommunikation geeignet ist, enthält, von den zwei Kautschukbändern (10) zu trennen; und
eine Druckrolle (15), die stromabwärts der zweiten Zuführeinrichtung (13) angeordnet ist; und
einen Aktor (17), der die Druckrolle (15) veranlasst, über das zweite Kautschukband (14) zu rollen, um das zweite Kautschukband (14) gegen das erste Kautschukband (10) zu drücken
wobei die Verarbeitungseinheit (8) **dadurch gekennzeichnet ist, dass:**
der Aktor ferner die Druckrolle (15) veranlasst, einen Vorwärtshub in eine Richtung und einen Rückwärtshub in die entgegengesetzte Richtung zu beenden, und **dadurch, dass**
der Förderer (9) zum Vorwärtsbewegen des ersten Kautschukbandes (10) gemäß einem intermittierenden Bewegungsgesetz geeignet ist, das einen zyklischen Wechsel von Bewegungsphasen, während denen das erste Kautschukband (10) vorwärts bewegt wird, und Stillstandsphasen, während denen das erste Kautschukband (10) stationär bleibt, vorsieht; und
die Druckrolle (15) geeignet ist, veranlasst zu werden, über das zweite Kautschukband (14) zu rollen, wenn das erste Kautschukband (10) stationär ist.

## Revendications

1. Procédé de traitement pour insérer des dispositifs électroniques (1) qui sont adaptés pour communiquer par radiofréquence dans des manchons en caoutchouc (5) respectifs, dans lequel chacun de ceux-ci comprend deux bandes en chevauchement (6, 7) qui enserrent entre eux un dispositif électronique (1) correspondant qui est adapté pour communiquer par radiofréquence ; le procédé de traitement comprend les étapes consistant à :
faire avancer une première courroie en caoutchouc (10) disposée de préférence horizontalement le long d'un trajet d'insertion au moyen d'un transporteur (9), dans lequel la première courroie en caoutchouc (10) est prévue pour former une première bande (6) de chaque manchon (5) ;
placer les dispositifs électroniques (1) qui sont adaptés pour communiquer par radiofréquence sur une surface supérieure de la première courroie en caoutchouc (10) au moyen d'un premier dispositif d'alimentation (12) ;
placer, au moyen d'un second dispositif d'alimentation (13), sur la surface supérieure de la première courroie en caoutchouc (10) et sur chaque dispositif électronique (1) qui est adapté pour communiquer par radiofréquence et qui a été précédemment placé, une seconde courroie en caoutchouc (14) qui recouvre complètement les dispositifs électroniques (1) qui sont adaptés pour communiquer par radiofréquence, dans lequel la seconde courroie en caoutchouc (14) est prévue pour former une seconde bande (7) de chaque manchon (5) ;
découper, au moyen d'un dispositif de coupe (22) disposé en aval du second dispositif d'alimentation (13) le long de la direction de déplacement de la première courroie en caoutchouc (10), les deux courroies en caoutchouc (10, 14) en réalisant un périmètre découpé autour de chaque dispositif électronique (1) qui est adapté pour communiquer par radiofréquence afin de séparer chaque manchon (5) contenant un dispositif électronique (1) respectif qui est adapté pour communiquer par radiofréquence à partir des deux courroies en caoutchouc (10, 14) ; et
amener un rouleau de pression (15) à rouler sur la seconde courroie en caoutchouc (14) en aval du second dispositif d'alimentation (13) afin de presser la seconde courroie en caoutchouc (14) contre la première courroie en caoutchouc (10)
le procédé de traitement est **caractérisé en ce que** le rouleau de pression est amené à effectuer une course avant dans une direction et une course arrière dans la direction opposée,
le transporteur (9) fait avancer la première courroie en caoutchouc (10) selon une loi de mouvement intermittent qui fournit une alternance cyclique de phases de mouvement pendant lesquelles la première courroie en caoutchouc (10) est avancée et des phases d'arrêt pendant lesquelles la première courroie en caoutchouc (10) reste stationnaire ; et
le rouleau de pression (15) est amené à rouler sur la seconde courroie en caoutchouc (14) lorsque la première courroie en caoutchouc (10) est stationnaire.

2. Procédé de traitement selon la revendication 1, dans lequel le rouleau de pression (15) est monté fou afin de se mettre librement en rotation autour d'un axe de rotation (16) perpendiculaire au trajet d'insertion.

3. Procédé de traitement selon la revendication 1 ou 2, dans lequel le rouleau de pression (15) est mû cycliquement d'avant en arrière le long d'une direction (D) qui est parallèle au trajet d'insertion.

4. Procédé de traitement selon l'une des revendications 1 à 3, dans lequel un actionneur (17) est fourni pour qu'il supporte le rouleau de pression (15) de manière rotative, qu'il meuve cycliquement le rouleau de pression (15), et en même temps presse le rouleau de pression (15) contre la courroie en caoutchouc sous-jacente (14) avec une force prédéterminée et constante.

5. Procédé de traitement selon la revendication 4, dans lequel l'actionneur (17) comprend des moyens élastiques (18) qui sont interposés entre un cadre (19) de l'actionneur (17) et des roulements (20) qui supportent le rouleau de pression (15).

6. Procédé de traitement selon l'une des revendications 1 à 5, dans lequel lorsque les deux courroies en caoutchouc (10, 14) sont stationnaires, le rouleau de pression (15) est mû parallèlement au trajet d'insertion, à partir d'une position de départ dans laquelle le rouleau de pression (15) est plus éloigné du second dispositif d'alimentation (13) vers une position d'arrivée dans laquelle le rouleau de pression (15) est plus proche du second dispositif d'alimentation (13), et est mû dans la direction opposée à partir de la position d'arrivée vers la position de départ.

7. Procédé de traitement selon l'une des revendications 1 à 6, dans lequel le dispositif de coupe (22) comprend une tête de coupe (23) qui porte une première lame creuse interne et une contre-tête (24) qui est alignée sur la tête de coupe (23) et qui est disposée sur l'autre côté de la première courroie en caoutchouc (10) par rapport à la tête de coupe (23).

8. Procédé de traitement selon l'une des revendications 1 à 7, dans lequel le premier dispositif d'alimentation (12) comprend :
une première tête de préhension qui est adaptée pour saisir et maintenir au moins un dispositif électronique (1) qui est adapté pour communiquer par radiofréquence ; et
un bras motorisé qui meut cycliquement la tête de préhension entre un poste de saisie, dans lequel la tête de préhension saisit un dispositif électronique (1) qui est adapté pour communiquer par radiofréquence, et un poste de transfert, dans lequel la tête de préhension place le dispositif électronique (1) qui est adapté pour communiquer par radiofréquence sur la surface supérieure de la première courroie en caoutchouc (10).

9. Procédé de traitement selon l'une des revendications 1 à 8 et comprenant l'étape supplémentaire consistant à presser l'une contre l'autre la première courroie en caoutchouc (10) et la seconde courroie en caoutchouc (14) au moyen d'un dispositif de compression (21) qui est disposé entre le second dispositif d'alimentation (13) et le dispositif de coupe (22).

10. Procédé de traitement selon la revendication 9, dans lequel le dispositif de compression (21) comprend une paire de rouleaux de pression coopérant entre eux, dans lequel les courroies en caoutchouc (10, 14) passent entre eux.

11. Procédé de traitement selon l'une des revendications 1 à 10, dans lequel le dispositif électronique (1) qui est adapté pour communiquer par radiofréquence, est adapté pour être intégré dans un pneumatique.

12. Procédé de traitement (8) pour insérer des dispositifs électroniques (1) qui sont adaptés pour communiquer par radiofréquence dans des manchons en caoutchouc (5) respectifs, dans lequel chacun de ceux-ci comprend deux bandes en chevauchement (6, 7) qui enserrent entre eux un dispositif électronique (1) correspondant qui est adapté pour communiquer par radiofréquence ; l'unité de traitement (8) comprend :
un transporteur (9) pour faire avancer une première courroie en caoutchouc (10) disposée de préférence horizontalement le long d'un trajet d'insertion, dans lequel la première courroie en caoutchouc (10) est prévue pour former une première bande (6) de chaque manchon (5) ;
un premier dispositif d'alimentation (12) pour placer le dispositif électronique (1) qui est adapté pour communiquer par radiofréquence, sur une surface supérieure de la première courroie en caoutchouc (10) ;
un second dispositif d'alimentation (13) pour placer sur la surface supérieure de la première courroie en caoutchouc (10), et au-dessus de chaque dispositif électronique (1) précédemment positionné qui est adapté pour communiquer par radiofréquence, une seconde courroie en caoutchouc (14) qui recouvre complètement les dispositifs électroniques (1) qui sont adaptés pour communiquer par radiofréquence, dans lequel la seconde courroie en caoutchouc (14) est prévue pour former une seconde bande (7) de chaque manchon (5) ; un dispositif de coupe (22), disposé en aval du second dispositif d'alimentation (13) le long de la direction de déplacement de la première courroie en caoutchouc (10), afin de découper les deux courroies en caoutchouc (10, 14) en réalisant un périmètre découpé autour de chaque dispositif électronique (1) qui est adapté pour communiquer par radiofréquence afin de séparer chaque manchon (5) contenant un dispositif électronique (1) respectif qui est adapté pour communiquer par radiofréquence, à partir des deux courroies en caoutchouc (10) ; et
un rouleau de pression (15) qui est disposé en aval du second dispositif d'alimentation (13) ; et
un actionneur (17) qui amène le rouleau de pression (15) à rouler sur la seconde courroie en caoutchouc (14) afin de presser la seconde courroie en caoutchouc (14) contre la première courroie en caoutchouc (10)
l'unité de traitement (8) est **caractérisée en ce que** :
l'actionneur amène en outre le rouleau de pression (15) à effectuer une course avant dans une direction et une course arrière dans la direction opposée et **en ce que**
le transporteur (9) est adapté pour faire avancer la première courroie en caoutchouc (10) selon une loi de mouvement intermittent qui fournit une alternance cyclique de phases de mouvement pendant lesquelles la première courroie en caoutchouc (10) est avancée et des phases d'arrêt pendant lesquelles la première courroie en caoutchouc (10) reste stationnaire ; et
le rouleau de pression (15) est adapté pour être amené à rouler sur la seconde courroie en caoutchouc (14) lorsque la première courroie en caoutchouc (10) est stationnaire.
